# EUROPEAN PATENT APPLICATION

(11) **EP 4 811 912 A1**
(43) Date of publication of application: **23.09.2026**
(21) Application number: 24902724.4
(22) Date of filing: 06.12.2024
(51) Int. Cl.: H04W 72/232, H04W 16/28, H04W 72/0446

(54) **SATELLITE COMMUNICATION METHOD, APPARATUS AND SYSTEM**

(30) Priority: 12.12.2023 CN 202311703597
(71) Applicant: Huawei Technologies Co., Ltd., Shenzhen, Guangdong 518129 (CN)
(72) Inventor: KONG, Chuili, Shenzhen, Guangdong 518129 (CN); LUO, Hejia, Shenzhen, Guangdong 518129 (CN); WANG, Xiaolu, Shenzhen, Guangdong 518129 (CN)
(74) Representative: Gill Jennings & Every LLP
(86) International application number: PCT/CN2024/137378
(87) International publication number: WO 2025/124303

(57) **Abstract**

A satellite communication method and apparatus, and a system are provided, and relate to the communication field. The method includes: receiving first control information, where the first control information includes first position information and first time information, the first position information indicates a position of a first area to be covered by a beam of a first network device, and the first time information indicates a first time interval; determining a first beam direction based on the first position information and second position information, where the second position information indicates a position of the first network device; and transmitting data in the first beam direction in the first time interval. According to the method, information carried in control signaling can be simplified, and a satellite station can be controlled based on the information to implement a beam staring function for a beam position in a plurality of time intervals, thereby reducing signaling overheads caused by sending the control signaling by a network side, and helping relieve transmission pressure of signaling interaction in a communication system.

## Description

This application claims priority to Chinese Patent Application No. 202311703597.1, filed with the China National Intellectual Property Administration on December 12, 2023 and entitled "SATELLITE COMMUNICATION METHOD AND APPARATUS, AND SYSTEM", which is incorporated herein by reference in its entirety.

### TECHNICAL FIELD

This application relates to the communication field, and in particular, to a satellite communication method and apparatus, and a system.

### BACKGROUND

Non-terrestrial network (non-terrestrial network, NTN) communication is characterized by wide coverage and flexible networking, and constitutes an important communication technology in the communication field. A satellite communication system is an important part of NTNs. A satellite station in the satellite communication system may serve as a network-controlled repeater (network-controlled repeater, NCR) node, and forward data of a terrestrial base station to user equipment.

During moving of the satellite station, to continuously and stably provide services for a fixed beam position on the ground, the satellite station needs to continuously adjust a beam direction, so that a beam continuously points to the fixed beam position. This process is also referred to as beam staring. Because the satellite station moves continuously during its operation, the beam direction of the satellite station needs to change continuously. However, the change of the beam direction of the satellite station needs to be indicated by the terrestrial base station by using control signaling. In this case, the terrestrial base station needs to continuously send a large amount of control signaling to the satellite station, to ensure that the satellite station can accurately point a beam to a fixed beam position on the ground during moving. Consequently, signaling overheads caused by this process are huge.

### SUMMARY

Embodiments of this application provide a satellite communication method and apparatus, and a system, to simplify information carried in control signaling, and control, based on the information, a satellite station to implement a beam staring function for a beam position in a plurality of time intervals, thereby reducing signaling overheads caused by sending the control signaling by a network side, and helping alleviate transmission pressure of signaling interaction in a communication system.

According to a first aspect, a satellite communication method is provided. The method includes: receiving first control information, where the first control information includes first position information and first time information, the first position information indicates a position of a first area to be covered by a beam of a first network device, and the first time information indicates a first time interval; determining a first beam direction according to the first position information and second position information, where the second position information indicates a position of the first network device; and transmitting data in the first beam direction in the first time interval.

For example, the first control information may be a satellite station serving as an NCR node in a relay communication system.

For example, the first area may be a beam position in a service area managed by the first network device.

For example, the first time information is also referred to as a first time resource, and includes a start moment of the first time interval and duration of the first time interval; the first time information may include a start moment and an end moment of the first time interval; or the first time information may include duration and an end moment of the first time interval.

For example, the first position information and the first time information may alternatively be separately sent by using two pieces of control signaling.

For example, the second position information may indicate a position of the first network device at a first moment before the first time interval. Further, a time difference between the first moment and the start moment of the first time interval needs to be within a preset range.

For example, the transmitting the data in the first beam direction may be forwarding, by the first network device, data from a core network to a terminal device or a network device in the first area indicated by the first beam direction. The data may be amplified and forwarded by the first network device; may be forwarded after the first network device performs corresponding data processing, where this process is also referred to as decoding and forwarding; or may be forwarded after the first network device performs storage, where this process is also referred to as storage and forwarding.

For example, the transmitting the data includes sending data and receiving data. The sending data corresponds to a downlink communication scenario, and the first network device sends data to a terminal device or a network device in the first area in the first beam direction. The receiving data corresponds to an uplink communication scenario, and the first network device may further receive data from a terminal device or a network device in the first area in the first beam direction. It can be learned that the first beam direction does not represent only a single direction, and the first beam direction may represent directions respectively corresponding to two ends of the first beam, that is, may represent two directions.

According to the foregoing technical solution, information carried in control signaling can be simplified. For dynamic configuration, the control signaling needs to carry only one piece of position information indicating a beam position, to control the first network device to implement a beam staring function for the beam position in a plurality of time intervals. For static configuration and semi-static configuration, the control signaling needs to configure only one group of position information for a plurality of beam positions and a plurality of pieces of corresponding time information in one configuration period, to control the first network device to continuously perform a staring function for the plurality of beam positions in a plurality of configuration periods. This reduces signaling overheads caused by sending the control signaling by a network side, and helps alleviates transmission pressure of signaling interaction in a communication system.

With reference to the first aspect, in some implementations of the first aspect, the first position information is a first coordinate point, and the first coordinate point belongs to the first area; or the first position information is a reference beam direction, and the reference beam direction indicates a direction from the first network device to the first area in a reference time interval before the first time interval; and the second position information is a second coordinate point, and the second coordinate point is spatial coordinates of the position of the first network device.

According to the foregoing technical solution, a coordinate point corresponding to a beam position is indicated to the first network device, or the reference beam direction is directly indicated, to assist the first network device in independently determining beam directions corresponding to the first network device in a plurality of time intervals. In addition, information carried in control signaling configured on a network side can be simplified, thereby reducing transmission pressure of signaling interaction in a communication system.

With reference to the first aspect, in some implementations of the first aspect, when the first position information is the reference beam direction, a fourth coordinate point is determined based on the reference beam direction and a third coordinate point, where the third coordinate point is spatial coordinates of the first network device in the reference time interval; and the first beam direction is determined based on the second coordinate point and the fourth coordinate point.

According to the foregoing technical solution, the first network device calculates, based on the reference beam direction, a reference position to which the reference beam direction points, so that in a subsequent corresponding time interval, the first network device can determine a beam direction in the corresponding time interval based on position information of the first network device and a reference position, to help simplify information carried in control signaling, thereby reducing signaling overheads caused by sending the control signaling by a network side, and helping alleviate transmission pressure of signaling interaction in a communication system.

With reference to the first aspect, in some implementations of the first aspect, the first control information further includes first period information, the first period information indicates a plurality of first periods, and when the first position information is the reference beam direction, a 1^{st} first period includes the reference time interval, an N^{th} first period includes the first time interval, and a beam direction corresponding to the first time interval included in the N^{th} first period is determined based on the reference beam direction corresponding to the reference time interval included in the 1^{st} first period, where N is an integer greater than 1.

According to the foregoing technical solution, for static configuration and semi-static configuration, the first control information needs to configure only one group of position information for a plurality of beam positions and a plurality of pieces of corresponding time information in one period, to control the first network device to continuously perform a staring function for the plurality of beam positions in a plurality of configuration periods. This reduces signaling overheads caused by sending control signaling by a network side, and helps alleviates transmission pressure of signaling interaction on the network side.

With reference to the first aspect, in some implementations of the first aspect, the first control information further includes a first flag, and the first flag is used to trigger the first network device to determine the first beam direction based on the first position information and the second position information.

According to the foregoing technical solution, a corresponding operation in this solution is triggered by using the first flag, thereby improving flexibility of application of this solution.

With reference to the first aspect, in some implementations of the first aspect, the first control information is downlink control information (downlink control information, DCI) or radio resource control (radio resource control, RRC) signaling.

For example, when the first position information includes the reference beam direction, the reference beam direction may reuse a manner of indicating a beam direction by using current DCI or RRC signaling, for example, use a beam index (beam index) to indicate the beam direction.

According to the foregoing technical solution, an existing data format of control signaling is directly reused, and the data format of the control signaling does not need to be reconstructed, thereby reducing implementation difficulty of this solution.

With reference to the first aspect, in some implementations of the first aspect, first capability information is sent, where the first capability information indicates whether the beam of the first network device is capable of pointing to any direction.

According to the foregoing technical solution, the first network device reports information about whether the first network device has a staring function, so that a network side can accurately learn of a beamforming capability of the first network device, to enable the network side to effectively control the first network device.

According to a second aspect, a satellite communication method is provided, and is applied to a second network device. The method includes: determining first control information, where the first control information includes first position information and first time information, the first position information indicates a position of a first area that is to be covered by a beam of a first network device, the first time information indicates a first time interval, and the first control information indicates the first network device to determine a first beam direction based on the first position information, and transmitting data in the first beam direction in the first time interval; and sending the first control information.

For example, the second network device may be a terrestrial station in a satellite-based relay communication system, alternatively referred to as a gateway station, and the terrestrial station integrates all or some functions of a base station. Alternatively, the second network device may be a network entity in a core network.

With reference to the second aspect, in some implementations of the second aspect, the first position information is a first coordinate point, and the first coordinate point belongs to the first area; or the first position information is a reference beam direction, and the reference beam direction indicates a direction from the first network device to the first area in a reference time interval before the first time interval.

With reference to the second aspect, in some implementations of the second aspect, the first control information further includes first period information, the first period information indicates a plurality of first periods, and when the first position information is the reference beam direction, a 1^{st} first period includes the reference time interval, an N^{th} first period includes the first time interval, and a beam direction corresponding to the first time interval included in the N^{th} first period is determined based on the reference beam direction corresponding to the reference time interval included in the 1^{st} first period, where N is an integer greater than 1.

With reference to the second aspect, in some implementations of the second aspect, the first control information further includes a first flag, the first flag is used to trigger the first network device to determine the first beam direction based on the first position information and second position information, and the second position information indicates a position of the first network device.

With reference to the second aspect, in some implementations of the second aspect, the first control information is DCI or RRC signaling.

With reference to the second aspect, in some implementations of the second aspect, first capability information is received, where the first capability information indicates whether the beam of the first network device is capable of pointing to any direction; and the first control information is determined when the first capability information indicates that the beam of the first network device is capable of pointing to any direction.

According to a third aspect, a satellite communication apparatus is provided, and is used in a first network device. The apparatus includes: a receiving unit, configured to receive first control information, where the first control information includes first position information and first time information, the first position information indicates a position of a first area to be covered by a beam of the first network device, and the first time information indicates a first time interval; a determining unit, configured to determine a first beam direction based on the first position information and second position information, where the second position information indicates a position of the first network device; and an operation unit 830, configured to transmit data in the first beam direction in the first time interval.

With reference to the third aspect, in some implementations of the third aspect, the first position information is a first coordinate point, and the first coordinate point belongs to the first area; or the first position information is a reference beam direction, and the reference beam direction indicates a direction from the first network device to the first area in a reference time interval before the first time interval; and the second position information is a second coordinate point, and the second coordinate point is spatial coordinates of the position of the first network device.

With reference to the third aspect, in some implementations of the third aspect, when the first position information is a reference beam direction, the determining unit is specifically configured to: determine a fourth coordinate point based on the reference beam direction and a third coordinate point, where the third coordinate point is spatial coordinates of the first network device in the reference time interval; and determine the first beam direction based on the second coordinate point and the fourth coordinate point.

With reference to the third aspect, in some implementations of the third aspect, the first control information further includes first period information, the first period information indicates a plurality of first periods, and when the first position information is the reference beam direction, a 1^{st} first period includes the reference time interval, an N^{th} first period includes the first time interval, and a beam direction corresponding to the first time interval included in the N^{th} first period is determined based on the reference beam direction corresponding to the reference time interval included in the 1^{st} first period, where N is an integer greater than 1.

With reference to the third aspect, in some implementations of the third aspect, the first control information further includes a first flag, and the first flag is used to trigger the determining unit to determine the first beam direction based on the first position information and the second position information.

With reference to the third aspect, in some implementations of the third aspect, the first control information is DCI or RRC signaling.

With reference to the third aspect, in some implementations of the third aspect, the apparatus further includes a sending unit, configured to send first capability information, where the first capability information indicates whether the beam of the first network device is capable of pointing to any direction.

According to a fourth aspect, a satellite communication apparatus is provided. The apparatus is used in a second network device, and the apparatus includes: a determining unit, configured to: determine first control information, where the first control information includes first position information and first time information, the first position information indicates a position of a first area to be covered by a beam of a first network device, the first time information indicates a first time interval, and the first control information indicates the first network device to determine a first beam direction based on the first position information, and transmit data in the first beam direction in the first time interval; and a sending unit, configured to send the first control information.

With reference to the fourth aspect, in some implementations of the fourth aspect, the first position information is a first coordinate point, and the first coordinate point belongs to the first area; or the first position information is a reference beam direction, and the reference beam direction indicates a direction from the first network device to the first area in a reference time interval before the first time interval.

With reference to the fourth aspect, in some implementations of the fourth aspect, the first control information further includes first period information, the first period information indicates a plurality of first periods, and when the first position information is the reference beam direction, a 1^{st} first period includes the reference time interval, an N^{th} first period includes the first time interval, and a beam direction corresponding to the first time interval included in the N^{th} first period is determined based on the reference beam direction corresponding to the reference time interval included in the 1^{st} first period, where N is an integer greater than 1.

With reference to the fourth aspect, in some implementations of the fourth aspect, the first control information further includes a first flag, the first flag is used to trigger the first network device to determine the first beam direction based on the first position information and second position information, and the second position information indicates a position of the first network device.

With reference to the fourth aspect, in some implementations of the fourth aspect, the first control information is DCI or RRC signaling.

With reference to the fourth aspect, in some implementations of the fourth aspect, the apparatus further includes a receiving apparatus, configured to receive first capability information, where the first capability information indicates whether the beam of the first network device is capable of pointing to any direction; and the determining unit is specifically configured to determine the first control information when the first capability information indicates that the beam of the first network device is capable of pointing to any direction.

According to a fifth aspect, a satellite communication apparatus is provided, including a processor and a memory. The processor is connected to the memory. The memory is configured to store program code, and the processor is configured to invoke the program code, to perform the method according to any one of the possible implementations of the method design in the first aspect or the second aspect.

According to a sixth aspect, a network apparatus is provided, including a processor. The processor is configured to execute program code, to perform the method according to any one of the possible implementations of the method design in the first aspect or the second aspect.

According to a seventh aspect, a network apparatus is provided, including a processor, a memory, and a transceiver. The memory is configured to store computer instructions, the transceiver is configured to: receive a signal from the memory, and send the signal to the processor, where the signal includes the computer instructions, and the processor is configured to execute the computer instructions, to perform the method according to any one of the possible implementations of the method design of the first aspect or the second aspect.

According to an eighth aspect, a network apparatus is provided, including an interface circuit and a processor. The interface circuit and the processor are interconnected through a line; the interface circuit is configured to: receive a signal, and send the signal to the processor, where the signal includes computer instructions, and the processor is configured to execute the computer instructions, to perform the method according to any one of the possible implementations of the method design of the first aspect or the second aspect.

According to a ninth aspect, a network apparatus is provided, including an interface circuit and a logic circuit. The interface circuit and the logic circuit are interconnected through a line. The interface circuit is configured to: receive a signal, and send the signal to the logic circuit, where the signal includes computer instructions, and the logic circuit is configured to execute the computer instructions, to perform the method according to any one of the possible implementations of the method design of the first aspect or the second aspect.

According to a tenth aspect, a communication system is provided, including a first network device and a second network device. The first network device is configured to perform the method according to any one of the possible implementations of the method design of the first aspect, and the second network device is configured to perform the method according to any one of the possible implementations of the method design of the second aspect.

According to an eleventh aspect, a chip system is provided. The chip system is used in an electronic device. The chip system includes one or more interface circuits and one or more processors. The interface circuit and the processor are interconnected through a line. The interface circuit is configured to: receive a signal from a memory of the electronic device, and send the signal to the processor, where the signal includes computer instructions stored in the memory. When the processor executes the computer instructions, the electronic device performs the method according to any one of the possible implementations of the method design of the first aspect or the second aspect.

According to a twelfth aspect, a computer-readable storage medium is provided, and stores a computer program or instructions. The computer program or the instructions are used for implementing the method according to any one of the possible implementations of the method design of the first aspect or the second aspect.

According to a thirteenth aspect, a computer program product is provided. When computer program code or instructions are executed on a computer, the computer is enabled to perform the method according to any one of the possible implementations of the method design of the first aspect or the second aspect.

### BRIEF DESCRIPTION OF DRAWINGS

FIG. 1 is a diagram of a relay solution;
FIG. 2 is a diagram of an architecture of a satellite communication system 200 applicable to an embodiment of this application;
FIG. 3 is a diagram of an architecture of an NCR node;
FIG. 4 is a diagram of an architecture of a satellite network 400 applicable to a technical solution of this application;
FIG. 5 is a schematic flowchart of a satellite communication method 500 according to an embodiment of this application;
FIG. 6 is a diagram of an execution process of a method 500 according to an embodiment of this application;
FIG. 7 is a diagram of another execution process of a method 500 according to an embodiment of this application;
FIG. 8 is a diagram of a reference beam direction according to an embodiment of this application;
FIG. 9 is a schematic block diagram of a satellite communication apparatus 900 according to an embodiment of this application; and
FIG. 10 is a schematic block diagram of a satellite communication apparatus 1000 according to an embodiment of this application.

### DESCRIPTION OF EMBODIMENTS

The following describes technical solutions of embodiments in this application with reference to accompanying drawings.

To expand ground coverage of a base station signal, it is generally considered that a plurality of relay nodes are deployed on the ground to relay data sent by a base station. However, a conventional relay node typically has only amplification and forwarding functions, and is poor in controllability. A solution of using an NCR as a relay node is proposed to enhance functionality of the relay node. A network side sends corresponding control signaling to the NCR node, to indicate the NCR node to forward data. Compared with the conventional relay node that can have only the amplification and forwarding functions, the NCR node allows network-side control, and has strong spatial directivity, thereby helping improve quality of service of data forwarding.

However, a terrestrial relay solution also has the following problem:

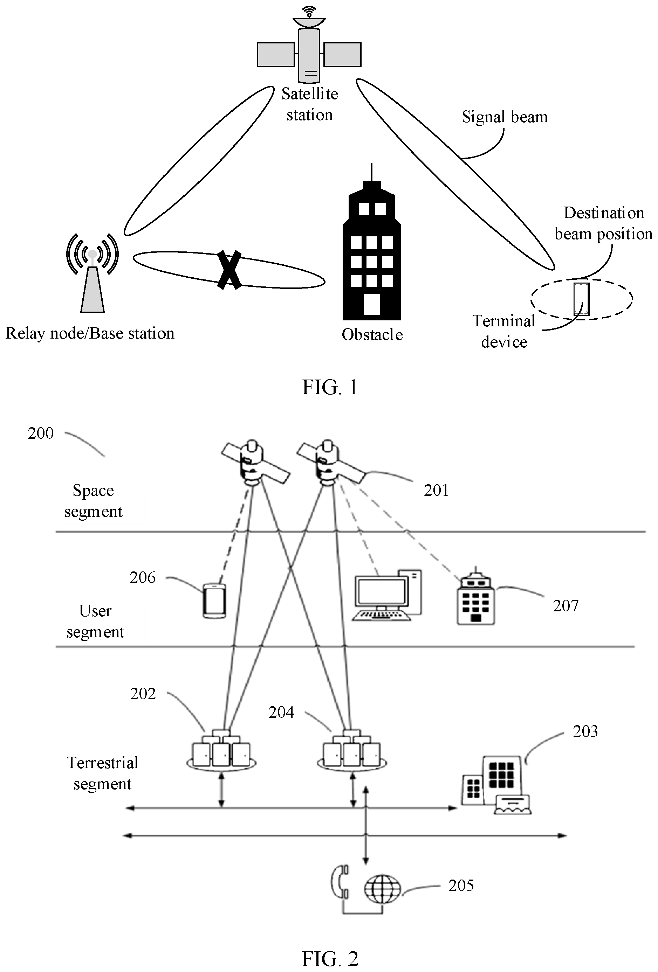

FIG. 1 is a diagram of a relay solution.

Refer to FIG. 1. A source base station may directly establish a communication link to a terminal device. When the source base station is far away from the terminal device, a terrestrial relay solution may be used, that is, the source base station establishes a communication link from the source base station to the terminal device with a plurality of relay nodes deployed on the ground. When a high obstacle or another blockage exists between the source base station and the terminal device, between the plurality of relay nodes, between the source base station and the relay node, or between the relay node and the terminal device, the communication link from the source base station to the terminal device may be blocked. To resolve this problem in the terrestrial relay solution, an NTN-based relay solution is proposed, that is, a satellite station may be used as a relay node to forward data. Because NTN communication has characteristics such as a large coverage area and flexible networking, the satellite station may cross an obstacle or a blockage between a base station and a destination beam position, and transmit a signal beam to the destination beam position, so that communication data can be forwarded to a terminal device in the destination beam position. The obstacle may be an object such as a tall building or a tree, and the blockage may be a wide sea area or the like. The destination beam position indicates a range that needs to be covered by a beam signal.

For ease of understanding embodiments of this application, the following describes a satellite communication system.

FIG. 2 is a diagram of an architecture of a satellite communication system 200 applicable to an embodiment of this application.

The technical solutions of this application may be applied to a satellite communication system. Refer to FIG. 2. The satellite communication system 200 typically includes three parts: a space segment, a terrestrial segment, and a user segment.

For example, based on an orbital altitude of a satellite 201, the satellite communication system may be classified into the following three types: a geostationary orbit (geostationary earth orbit, GEO) satellite communication system, also referred to as a geosynchronous orbit satellite communication system; a medium earth orbit (medium earth orbit, MEO) satellite communication system; and a low earth orbit (low earth orbit, LEO) satellite communication system. A GEO satellite has an orbital altitude of 35786 km. A main advantage is that the GEO satellite can remain stationary relative to the ground and provide a large coverage area. However, GEO satellite communication also has definite disadvantages. A GEO satellite orbit is far away from the Earth, and a transmission loss in free space is large. As a result, a communication link budget is tight. In addition, to increase a transmit or receive gain, a satellite needs to be equipped with a large-aperture antenna. GEO communication has a long transmission delay, which may be a round-trip delay of up to approximately 500 ms, which cannot meet a requirement of a low-delay service. GEO also has scarce orbit resources and high transmission costs, and cannot provide coverage for two poles of the Earth. An MEO satellite has an orbital altitude of 2000 km to 35786 km. An advantage is that global coverage can be implemented by using a smaller quantity of satellites. However, the MEO satellite has a larger orbital altitude than the LEO, and a transmission delay is still longer than that of LEO satellite communication. An LEO satellite has an orbital altitude of 300 km to 2000 km. The LEO satellite has a lower orbital altitude than the MEO and the GEO, and has advantages of a short data propagation delay, a small transmission loss, and low transmission costs. Therefore, the LEO satellite may be used to construct the space segment shown in FIG. 2. Certainly, in some specific application scenarios, the LEO satellite may be replaced with the GEO satellite or the MEO satellite, or even a combination of a plurality of types of satellites.

The terrestrial segment typically includes a satellite measurement and control center 202, a network control center (network control center, NCC) 203, various gateway (gateway) stations 204, and the like. The gateway station is alternatively referred to as a terrestrial station. The network control center is also referred to as a system control center (system control center, SCC). The user segment includes various terminal devices. The terminal device may be various mobile terminals 206, such as a mobile satellite phone, or may be various fixed terminals 207, such as a terrestrial communication station. In FIG. 2, a dashed line refers to a communication signal between a satellite and a terminal; a solid line refers to a communication signal between a satellite and a device in the terrestrial segment; and a bi-directional arrow line refers to a communication signal between network elements in the terrestrial segment. In the satellite communication system, the satellite may also be referred to as a satellite station or a satellite base station. Refer to FIG. 2. The satellite station may transmit downlink data to a terminal device. The downlink data may be transmitted to the terminal device after channel coding and modulation mapping are performed on the downlink data. The terminal device may also transmit uplink data to the satellite station. The uplink data may also be transmitted to the satellite station after channel coding and modulation mapping are performed on the uplink data.

The satellite measurement and control center 202 in the terrestrial segment has functions such as maintaining, monitoring, and controlling an orbital position and a posture of the satellite, and managing an ephemeris of the satellite. The network control center 203 has a user registration processing function, an identity confirmation function, a charging function, and another network management function. In some satellite mobile communication systems, the network control center 203 and the satellite measurement and control center 202 are combined. The gateway station 204 has functions such as call processing, switching, and interface with a terrestrial communication network. The terrestrial communication network 205 is a part of the terrestrial segment of the satellite network, and is configured to switch a data packet of a satellite to a core network and send the data packet to a final terminal device. The terrestrial communication network may be a public switched telephone network (public switched telephone network, PSTN), a public land mobile network (public land mobile network, PLMN), or various other dedicated networks. Different terrestrial communication networks require the gateway station to have different gateway functions.

In some satellite communication systems, a space segment of the satellite communication system may be a multi-layer structure formed by a management satellite and one or more service satellites. In the networking of a satellite communication system with the multi-layer structure, the space segment may include one or more management satellites and service satellites managed by the management satellites. The satellite or the satellite station mentioned in this application is not limited to a management satellite or a service satellite.

The gateway station, the satellite station, and the terminal device communicate with each other by using but not limited to the following communication systems: a 5th generation (5th generation, 5G) mobile communication system such as a new radio (new radio, NR) system, and a future communication system.

In some possible scenarios, the gateway station and the satellite station may be collectively referred to as a radio access network (radio access network, RAN) node, or may be referred to as an access network device, a RAN entity, an access node, or the like.

In some other possible scenarios, a plurality of RAN nodes may coordinate to assist the terminal in implementing wireless access, and different RAN nodes separately implement some functions of the gateway station and the satellite station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The CU node and the DU node separates protocol layers of a gNB. Functions of some protocol layers are controlled by the CU in a centralized manner, and functions of some or all remaining protocol layers are distributed in the DU. The CU controls the DU in a centralized manner. In an implementation, an RRC layer, a packet data convergence layer protocol (packet data convergence protocol, PDCP) layer, and a service data adaptation protocol (service data adaptation protocol, SDAP) layer in a protocol stack are deployed on the CU; and a radio link control (radio link control, RLC) layer, a medium access control (medium access control, MAC) layer, and a physical layer (physical layer, PHY) in the protocol stack are deployed on the DU. Therefore, the CU has RRC, PDCP, and SDAP processing capabilities. The DU has RLC, MAC, and PHY processing capabilities. It may be understood that the foregoing function division is merely an example, and constitutes no limitation on the CU and the DU. The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU (or the CU-CP and the CU-UP), the DU, and the RU are used as examples for description in this application. Any one of the CU (or the CU-CP or the CU-UP), the DU, and the RU in this application may be implemented by using a software module, a hardware module, or a combination of a software module and a hardware module.

In this embodiment of this application, the terminal device needs to access a mobile satellite communication network by using the terrestrial segment of the satellite communication system to perform mobile communication. The terminal device may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network or a future communication network, a terminal device in a future evolved public land mobile network (public land mobile network, PLMN), or the like. A terminal device represented by a satellite phone or an in-vehicle satellite communication system may directly communicate with a satellite. A fixed terminal represented by a terrestrial communication station can communicate with a satellite only after being relayed by a terrestrial station. A wireless transceiver antenna is installed on the terminal device to set and obtain a communication status, to complete communication.

The satellite communication system is an important part of an NTN. A satellite station in the satellite communication system may serve as an NCR node, and forward data of a terrestrial base station to UE.

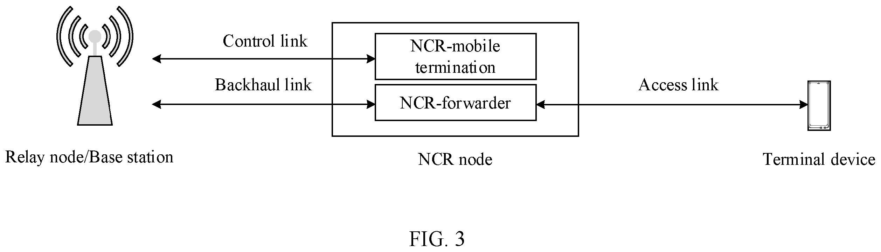

FIG. 3 is a diagram of an architecture of an NCR node.

Refer to FIG. 3. The NCR node may include two modules: an NCR-mobile termination (NCR-mobile termination, NCR-MT) and an NCR-forwarder (NCR-forwarding, NCR-Fwd). The NCR-MT establishes a connection to a terrestrial base station, for example, a 5G base station (next generation NodeB, gNB), through a control link (control link). The NCR-Fwd is connected to the terrestrial base station through a backhaul link (backhaul link), and is configured to: forward data from the terrestrial base station, and forward the data to UE through an access link (access link).

For example, the NCR node shown in FIG. 3 may be a satellite station in a satellite communication system, and the terrestrial base station shown in FIG. 3 may be a gateway (gateway) station. The gateway station may send control signaling to the satellite station, to control the satellite station to adjust a beam direction.

Currently, beam information of the NCR node is indicated in the following three configuration manners: static configuration, semi-static configuration, and dynamic configuration.

The static configuration is configuration performed by a base station by using RRC signaling sent to the NCR node. A specific quantity of forwarding resources (forwarding resource) may be configured at a time by using RRC signaling sent each time. Each forwarding resource may be defined as {beam index (beam index), time resource (time resource)}, where the beam index indicates a beam that is of the NCR node and that points to a specific direction, and the time resource indicates a period of time, which may include a start moment and duration. Based on the two pieces of information, the NCR can determine a start moment and duration of radiation of a specific beam.

In addition, a time period is further configured in the RRC signaling, and the time period needs to be greater than or equal to a sum of duration corresponding to all time resources in the foregoing specific quantity of forwarding resources. After each time period, if the NCR node can still cover a destination beam position, the NCR node repeatedly performs, in a next time period, the foregoing action of transmitting a corresponding beam.

For example, the base station is a gateway station, the NCR is a satellite station, three forwarding resources and a time period T are configured at a time by using RRC signaling, and each forwarding resource is defined as {beam 1, ΔT1}, {beam 2, ΔT2}, and {beam 3, ΔT3}, where ΔT1 may further indicate that a start moment is t1, ΔT2 may further indicate that a start moment is t2, and ΔT3 may further indicate that a start moment is t3; and t≥ΔT1+ΔT2+ΔT3. In this case, at the moment t1, the satellite station sends a corresponding beam based on a given beam direction when transmitting the beam 1; at the moment t2, the satellite station sends a corresponding beam based on a given beam direction when transmitting the beam 2; and at the moment t3, the satellite station sends a corresponding beam based on a given beam direction when transmitting the beam 3. After a time period, the satellite station repeatedly performs the foregoing action of transmitting a corresponding beam.

The semi-static configuration is also configuration performed by a base station by using RRC signaling sent to the NCR node. A specific quantity of forwarding resources may be configured at a time by using RRC signaling sent each time. Each forwarding resource may be defined as {beam index, time resource}. However, in the semi-static configuration, the base station needs to activate, by using a medium access control (medium access control, MAC) control element (control element, CE), a subset of all forwarding resources configured by using the RRC signaling.

In addition, in the semi-static configuration, a time period is also configured in the RRC signaling. After each time period, if the MAC CE does not change the activated subset of the forwarding resources or the NCR node can still cover a destination beam position, the NCR node repeatedly performs, in a next time period, an action of transmitting a corresponding beam based on the RRC signaling.

In the dynamic configuration, control information may be carried by using a format 5_0 in DCI, which is also referred to as DCI 5_0. The control information includes beam index information, and the beam index information occupies 6 bits. Therefore, the beam index information may indicate a maximum of 64 beam directions. In addition, the base station may indicate a maximum of Lmax beam directions by using the DCI each time, and each beam direction corresponds to one time resource. A value of Lmax may be configured by using RRC signaling.

When the satellite station serves as an NCR node, because the satellite station moves continuously during operation, a beam direction of the satellite station needs to change continuously. In this case, the terrestrial base station needs to continuously include a large amount of control signaling in the satellite station by using RRC signaling or DCI, to ensure that the satellite station can accurately point a beam to a fixed beam position on the ground during moving, that is, implement a beam staring function of the satellite station. Consequently, signaling overheads caused by this process are huge.

For the dynamic configuration, currently, DCI 5_0 can indicate a maximum of 64 beam directions, and a satellite cannot be controlled to implement all-round beam staring. In addition, because a length of DCI is limited, for example, a maximum length is 140 bits, an indication of one beam typically needs an information length greater than 20 bits, for example, a 6-bit beam index and time resource indication information of several bits. Therefore, a beam direction that can be indicated by using only one piece of DCI is more limited.

For the static configuration and semi-static configuration, especially when a serving cell is configured by using a plurality of synchronization signal/physical broadcast channel blocks (synchronization signal/physical broadcast channel block, SSB), the terminal device accesses and switches a network through beam scanning. In addition, beam scanning is a frequently-used communication technology currently. Beam scanning is a technology used to improve signal coverage and a capacity in a wireless communication system. To be specific, a base station may send a beam direction at a moment, and then send beams in different directions at a plurality of moments, so that a plurality of beams can cover an entire cell, thereby implementing beamforming and improving coverage efficiency. Based on this scenario, a plurality of beams having different directions need to be configured in one RRC configuration period. To implement a beam staring function of the satellite station, a plurality of beams having different directions need to be reconfigured for each RRC configuration period. It can be learned that in the static configuration and semi-static configuration scenario, signaling overheads related to a beam direction indication in the RRC signaling are still huge.

In view of this, embodiments of this application provide a satellite communication method and apparatus, and a system. Reference position information corresponding to a beam is sent to a satellite station, so that the satellite station deduces, based on position information of the satellite station and the reference position information, a beam direction corresponding to the beam. In this way, a beam staring function of the satellite station on a ground beam position is implemented by using a simplified signaling indication.

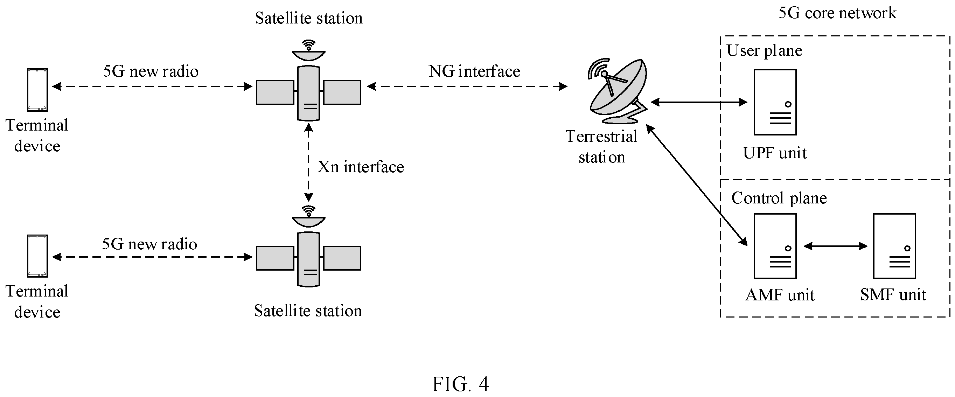

FIG. 4 is a diagram of an architecture of a satellite network 400 applicable to a technical solution of this application. A 5G scenario is used as an example in the diagram of the architecture. Certainly, the technical solutions provided in embodiments of this application are also applicable to a future communication network scenario.

The satellite network 300 includes a terminal device, a satellite station, a 5G core network, a terrestrial station, a 5G new radio, an Xn interface, and an NG interface.

The terminal device may be a mobile device that supports 5G new radio, for example, a mobile phone device, a tablet device, or a smart vehicle. The terminal device may access a satellite network through 5G new radio and initiate services such as calls and internet access.

The satellite station may be a 5G base station, and is mainly configured to: provide a wireless access service, schedule a radio resource for an accessed terminal device, and provide a reliable wireless transmission protocol, a reliable data encryption protocol, and the like. In addition, the satellite station may be connected to a terrestrial core network through a radio link. In addition, the satellite network may include a plurality of satellite stations, and a radio link also exists between the satellite stations, to complete signaling and data transmission between a plurality of base stations.

The 5G core network is configured to implement functions such as user access control, mobility management, session management, user security authentication, and charging management. These functions are implemented by the 5G core network by using corresponding functional units, and these functional units may be divided into a control plane function entity and a user plane function entity. For example, an access and mobility management (access and mobility management function, AMF) unit is configured to be responsible for functions such as user access management, security authentication, and mobility management that belong to a control plane, a session management function (session management function, SMF) unit is configured to support a customized mobility management solution together with the AMF unit, and a user plane function (user plane function, UPF) unit is configured to be responsible for managing functions such as user plane data transmission and traffic statistics collection. The function entity may also be referred to as a function network element.

The terrestrial station is configured to be responsible for forwarding signaling and service data between the satellite and the 5G core network. The terrestrial station may also implement a function of the 5G base station.

The 5G new radio is configured to connect a radio link between a terminal device and a 5G base station.

The Xn interface is an interface between a satellite station and a terrestrial station, and is mainly configured to perform signaling exchange such as switching.

The NG interface is an interface between a terrestrial station and a 5G core network, and is mainly configured to exchange non-access stratum (non-access stratum, NAS) signaling and the like on the core network and user service data.

Based on the satellite network 400, the satellite communication method provided in embodiments of this application may be performed. The method is as follows:

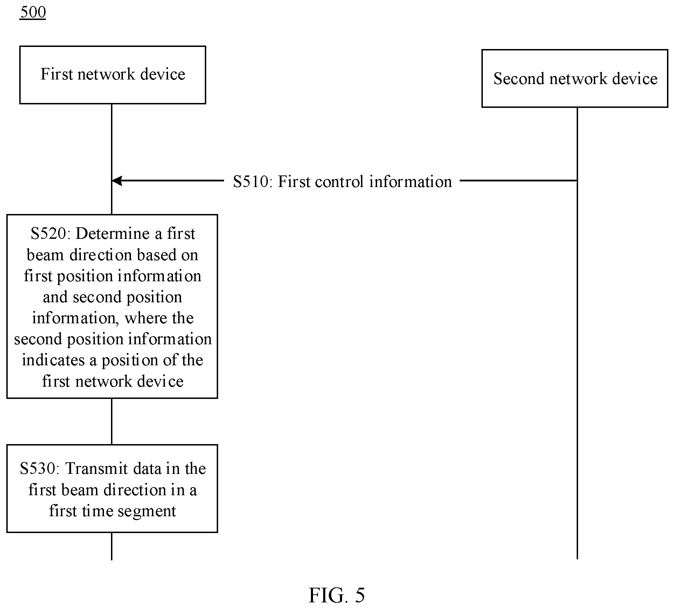

FIG. 5 is a schematic flowchart of a satellite communication method 500 according to an embodiment of this application. The method 500 may be applied to a first network device. The first network device may be a satellite station used as an NCR node. The first network device may also include a network device in an ORAN system, for example, a CU-UP, a CU-CP, a DU, and an RU.

S510. Receive first control information, where the first control information includes first position information and first time information, the first position information indicates a position of a first area to be covered by a beam of the first network device, and the first time information indicates a first time interval.

In some possible embodiments, the first area may be a beam position in a service area managed by the first network device.

In some possible embodiments, the first time information is also referred to as a first time resource, and includes a start moment of the first time interval and duration of the first time interval; the first time information may include a start moment and an end moment of the first time interval; or the first time information may include duration and an end moment of the first time interval.

In some possible embodiments, the first control information is determined and sent by a second network device. The second network device may be a network entity or a network element device in a core network. The first control information may be directly sent by the network entity to the first network device, or may be forwarded to the first network device through a relay node. The second network device may also include a network device in an ORAN system. For example, the first control information is determined and sent by using a CU-CP of the second network device.

For example, the first network device is a satellite station. The first control information may be first sent by the network entity in the core network to a terrestrial station corresponding to the satellite station, and then the terrestrial station forwards the first control information to the first network device. Alternatively, the terrestrial station determines the first control information based on related control signaling from the network entity in the core network and a current communication scenario, and then sends the first control information to the satellite station.

In some possible embodiments, in dynamic configuration, the first control information may be DCI, and in static configuration or semi-static configuration, the first control information may be RRC signaling.

In some possible embodiments, the first position information and the first time information may alternatively be separately sent by using two pieces of signaling. This is not limited in this embodiment of this application.

S520: Determine a first beam direction based on the first position information and second position information, where the second position information indicates a position of the first network device.

In some possible embodiments, the second position information may indicate a position of the first network device at a first moment before the first time interval. Further, a time difference between the first moment and the start moment of the first time interval needs to be within a preset range.

In some possible embodiments, the first network device may determine the second position information by using a global navigation system (global navigation satellite system, GNSS). It should be understood that the second position information may be a spatial coordinate point obtained by processing position information of the first network device that is obtained by the GNSS. The spatial coordinate point may be in a geodetic coordinate system, or may be in a satellite coordinate system.

It should be understood that the first area indicated by the first position information and the position of the first network device that is indicated by the second position information each may be abstracted as a point. In a spatial coordinate system, a direction vector can be determined based on the two determined points, and the direction vector may represent the first beam direction.

S530: Transmit data in the first beam direction in the first time interval.

It should be understood that the transmitting the data in the first beam direction may be forwarding, by the first network device, data from a core network to a terminal device or a network device in the first area indicated by the first beam direction. The data may be amplified and forwarded by the first network device; may be forwarded after the first network device performs corresponding data processing, where this process is also referred to as decoding and forwarding; or may be forwarded after the first network device performs storage, where this process is also referred to as storage and forwarding.

It should be understood that the first network device transmits the data in the first beam direction, so that a corresponding communication service can be provided for the terminal device in the first area, to establish a communication link from a core network to the terminal device, thereby implementing data exchange between the core network and the terminal device.

In some possible embodiments, the transmitting the data includes sending data and receiving data. The sending data corresponds to a downlink communication scenario, and the first network device sends data to a terminal device or a network device in the first area in the first beam direction. The receiving data corresponds to an uplink communication scenario, and the first network device may further receive data from a terminal device or a network device in the first area in the first beam direction.

In some possible embodiments, when the first network device is in an ORAN form, S510 and S520 may be performed by a CU-CP of the first network device, and S530 may be performed by a DU of the first network device. Certainly, with function iteration of the ORAN system, S510 and/or S520 may be performed by another ORAN device, for example, a CU-UP, and S530 may be performed by an RU of the first network device. Before S530, the CU-UP of the first network device may control, by using control signaling, the first network device to transmit the data in the first beam direction in the first time interval.

In addition, the first network device receives second time information, third time information, and the like. The second time information indicates a second time interval, the third time information indicates a third time interval, and in a time sequence, the second time interval is after the first time interval, the third time interval is after the second time interval, and so on. There is typically a time interval between these time intervals in a time sequence. Dynamic configuration is used as an example. After the first time interval, the first network device re-obtains the position of the first network device, to determine third position information, and then determines a second beam direction based on the third position information and the first position information. In this case, all preceding actions may be performed in a time interval between the first time interval and the second time interval. The first network device transmits data in the second beam direction in the second time interval. Similar to an operation performed after the second time interval, the first network device updates position information of the first network device, updates a beam direction based on the previously received first position information, and then adjusts a beam direction of the first network device.

Alternatively, if the first network device receives only the first time information, the first time information indicates a plurality of first time intervals. Based on this, before a 1^{st} first time interval, the first network device obtains the position of the first network device, to determine the second position information, and then determines the first beam direction based on the second position information and the first position information; and in a time interval between the 1^{st} first time interval and a 2^{nd} first time interval, the first network device re-obtains the position of the first network device, to determine the third position information, and then determines the second beam direction based on the third position information and the first position information. The same is true to operations in a time interval between the 2^{nd} first time interval and a 3^{rd} first time interval. Details are not described herein again.

It can be learned from the foregoing embodiment that, currently, a network side directly indicates the beam direction to an NCR node. For example, a transmit direction of each antenna in an antenna array of the NCR node is fixed. Each antenna in the antenna array has a different beam direction. In an application scenario in which the network side dynamically configures beam information of a satellite NCR node, because the satellite NCR node, which is briefly referred to as a satellite station below, moves continuously, the network side needs to configure a plurality of beam directions for the satellite direction in one beam position, and each beam direction corresponds to one time interval, so that beams can continuously point to a same beam position during moving of the satellite station. The network side may send DCI including information shown in Table 1 to the satellite station, to dynamically configure the satellite station to transmit, in each of a plurality of time intervals, a beam that meets a corresponding beam direction.

**Table 1**

| Beam index | Time information |
|---|---|
| 000 | First time interval |
| 001 | Second time interval |
| 010 | Third time interval |
| ... | ... |

The index number 000 indicates a first beam direction, the index number 001 indicates a second beam direction, and the index number 010 indicates a third beam direction.

It can be learned from the entire content shown in Table 1 that the DCI may indicate the satellite station to select, in the first time interval, a beam 1 pointing to the first beam direction, and then transmit data in the first beam direction through the beam 1; select, in the second time interval for transmission, a beam 2 pointing to the second beam direction, and then transmit data in the second beam direction through the beam 2; and select, in the third time interval for transmission, a beam 3 pointing to the third beam direction, and then transmit data in the third beam direction through the beam 3. It should be understood that the satellite station has known a beam direction corresponding to each antenna in the antenna array, and so on. Alternatively, when the satellite station can independently adjust a direction of an antenna transmit beam, the DCI may also indicate the satellite station to set the beam direction to the first beam direction in the first time interval, adjust the beam direction to the second beam direction in the second time interval, adjust the beam direction to the third beam direction in the third time interval, and then transmit data in a corresponding beam direction in each time interval, and so on.

It can be learned that the DCI carries a large amount of information content, and a plurality of pieces of time information and a plurality of beam directions need to be correspondingly set, resulting in high information overheads. In addition, a length of the DCI is limited, and therefore it is usually difficult for single DCI to carry all the information shown in Table 1.

However, according to the method 500 provided in this embodiment of this application, a beam direction of the satellite station in each time interval may be indicated by using more simplified control information, and the control information may also be carried in the DCI. In this case, the network side may send DCI including information shown in Table 2 to the satellite station, to dynamically configure a beam direction corresponding to the satellite station in each of a plurality of time intervals.

**Table 2**

| | Time information |
|---|---|
| First position information | First time interval |
| | Second time interval |
| | Third time interval |
| | ... |

The first position information indicates a position of a first area to be covered by a beam of the NCR node, which is also referred to as a beam position 1. Time information such as the first time interval includes a start moment and duration of a corresponding time interval, includes duration and an end moment of a corresponding time interval, or includes a start moment and an end moment of a corresponding time interval. The first position information may also be referred to as first reference information or first reference position information. This is not limited in this application.

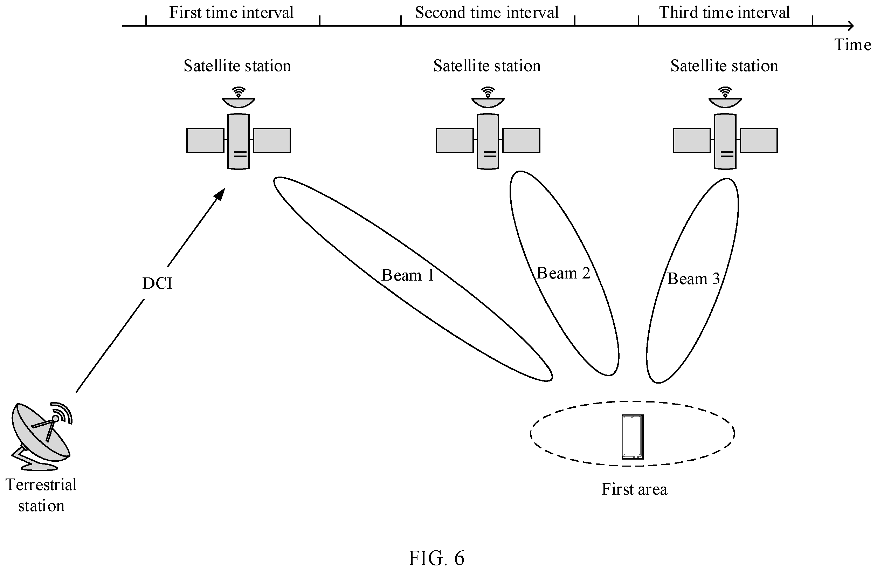

FIG. 6 is a diagram of an execution process of a method 500 according to an embodiment of this application.

It can be learned from the content shown in Table 1 and FIG. 6 that after receiving the DCI from the terrestrial station, the satellite station calculates the first beam direction based on position information of the satellite station and the first position information, and then selects, in the first time interval, the beam 1 pointing to the first beam direction, or adjusts a direction of a beam of an antenna, so that the beam points to the first beam direction, and then transmits data in the first beam direction through the beam; after the first time interval ends, the satellite station calculates the second beam direction based on current position information of the satellite station and the first position information, and then selects, in the second time interval, the beam 2 pointing to the second beam direction, or adjusts a direction of a beam of an antenna, so that the beam points to the second beam direction, and then transmits data in the second beam direction through the beam; after the second time interval ends, the satellite station calculates the third beam direction based on current position information of the satellite station and the first position information, and then selects, in the third time interval, the beam 3 pointing to the third beam direction, or adjusts a direction of a beam of an antenna, so that the beam points to the third beam direction, and then transmits data in the third beam direction through the beam; and so on.

It can be learned from Table 1 and Table 2 that, in the method 500 provided in this embodiment of this application, the DCI needs to carry only the first position information, and there is no need to correspondingly allocate a beam index to each time interval to indicate a beam direction. In addition, bits occupied by all the beam indexes in Table 1 are far greater than bits occupied by the first position information in Table 2.

In an application scenario of static configuration and semi-static configuration, an SSB sweeping technology is generally applied, that is, corresponding time information is correspondingly configured for a plurality of beam positions in one RRC configuration period, and then this is repeatedly performed for a plurality of RRC configuration periods. A reason is as follows:

In an SSB sweeping scenario, in a plurality of time intervals in one RRC configuration period, the satellite station needs to transmit beams in different directions respectively in the plurality of time intervals, to implement SSB sweeping in an area. In an RRC configuration period 1, the satellite station sends beams pointing to different directions respectively in the first time interval, the second time interval, and the third time interval. Because the satellite station moves continuously, in an RRC configuration period 2, if a beam staring function for a specified area needs to be implemented, directions of the beams sent by the satellite station respectively in the first time interval, the second time interval, and the third time interval cannot directly reuse beam directions respectively corresponding to the three time intervals in the RRC configuration period 1. Therefore, all beam directions and all time information that are configured in the previous RRC configuration period may be invalid. In this case, based on the current static configuration and semi-static configuration solution, for each RRC configuration period, a set of RRC signaling needs to be separately configured to indicate, to the satellite station, beam directions corresponding to a plurality of beams in a current configuration period and time information corresponding to each beam.

Currently, the network side may send RRC signaling including information shown in Table 3 to the satellite station, to statically or semi-statically configure the satellite station to transmit, in each RRC configuration period (briefly referred to as a period below), a beam that meets a corresponding beam direction. The RRC configuration period is typically 20 ms, and duration of the period may also be adaptively adjusted.

**Table 3**

| RRC configuration period | Beam index | Time information |
|---|---|---|
| Period 1 | 0000 | First time interval 1 |
| | 0001 | Second time interval 1 |
| | 0010 | Third time interval 1 |
| | ... | ... |
| Period 2 | 0011 | First time interval 2 |
| | 0100 | Second time interval 2 |
| | 0101 | Third time interval 2 |
| | ... | ... |
| Period 3 | 0110 | First time interval 3 |
| | 0111 | Second time interval 3 |
| | 1000 | Third time interval 3 |
| | ... | ... |
| ... | ... | ... |

The index number 0000 indicates a first beam direction, the index number 0001 indicates a second beam direction, the index number 0010 indicates a third beam direction, and so on.

It can be learned from the entire content shown in Table 3 that the RRC signaling may indicate the satellite station to select, in the first time interval 1, a beam 1 pointing to the first beam direction, and then transmit data in the first beam direction through the beam 1; select, in the second time interval 1, a beam 2 pointing to the second beam direction, and then transmit data in the second beam direction through the beam 2; select, in the third time interval 1, a beam 3 pointing to the third beam direction, and then transmit data in the third beam direction through the beam 3; and so on. Alternatively, when the satellite station can independently adjust a direction of an antenna transmit beam, the RRC signaling may indicate the satellite station to set a direction of a beam to the first beam direction in the first time interval 1, and then transmit data in the first beam direction through the beam; adjust a direction of a beam to the second beam direction in the second time interval 1, and then transmit data in the second beam direction through the beam; and adjust a direction of a beam to the third beam direction in the third time interval 1, and then transmit data in the third beam direction through the beam. In the period 2, the actions corresponding to the period 1 are repeated, and so on.

It can be learned that, in each RRC configuration period, the RRC signaling needs to carry a set of beam direction indication information. This causes high transmission pressure to interaction of control signaling in a communication system, and results in high information overheads.

However, according to the method 500 provided in this embodiment of this application, a beam direction of the satellite station in each time interval in each RRC configuration period may be indicated by using more simplified control information, and the control information may also be carried in RRC signaling. In this case, the network side may send RRC signaling including information shown in Table 4 to the satellite station, to statically or semi-statically configure a beam direction corresponding to the satellite station in each of a plurality of time intervals in each RRC configuration period.

**Table 4**

| RRC configuration period | | Time information |
|---|---|---|
| Periods 1 to N | First position information 1 | First time interval |
| | First position information 2 | Second time interval |
| | First position information 3 | Third time interval |
| | ... | ... |

The first position information 1 indicates a position of a first area to be covered by a beam of the NCR node, which is also referred to as a beam position 1; the first position information 2 indicates a position of a second area to be covered by the beam of the NCR node, which is also referred to as a beam position 2; and the first position information 3 indicates a position of a third area to be covered by the beam of the NCR node, which is also referred to as a beam position 3. It can be learned from the RRC signaling that the satellite station needs to keep performing SSB sweeping on a plurality of beam positions in the N RRC configuration periodicities.

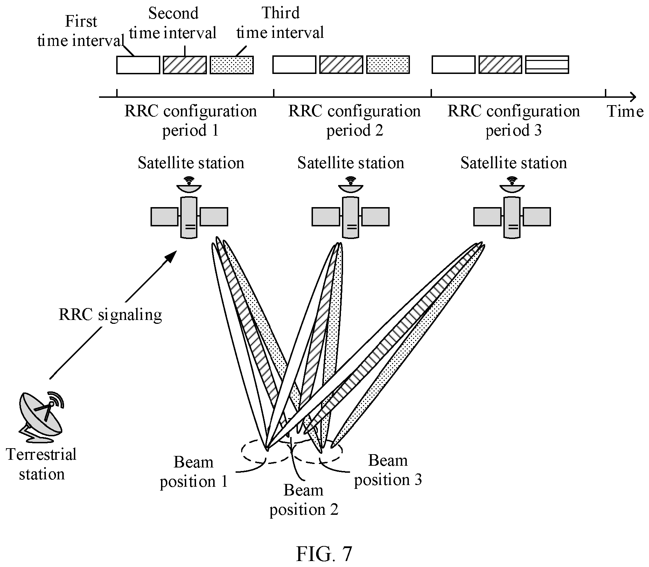

FIG. 7 is a diagram of another execution process of a method 500 according to an embodiment of this application.

It can be learned from the content shown in Table 4 and FIG. 7 that the satellite station receives the RRC signaling from the terrestrial station, and before the first time interval in the RRC configuration period 1, calculates the first beam direction based on position information of the satellite station and the first position information 1. In the first time interval in the RRC configuration period 1, the satellite station points the beam 1 to the first beam direction, or adjusts a direction of a beam of an antenna, so that the beam points to the first beam direction, and then transmits data in the first beam direction, where the beam 1 points to the beam position 1.

Before the second time interval in the RRC configuration period 1, the satellite station calculates the second beam direction based on position information of the satellite station and the first position information 2. In the second time interval in the RRC configuration period 1, the satellite station points the beam 2 to the second beam direction, or adjusts a direction of a beam of an antenna, so that the beam points to the second beam direction, and then transmits data in the second beam direction, where the beam 2 points to the beam position 2.

Before the third time interval in the RRC configuration period 1, the satellite station calculates the third beam direction based on position information of the satellite station and the first position information 3. In the third time interval in the RRC configuration period 1, the satellite station points the beam 3 to the third beam direction, or adjusts a direction of a beam of an antenna, so that the beam points to the third beam direction, and then transmits data in the third beam direction, where the beam 3 points to the beam position 3.

It should be understood that, in the foregoing process, the satellite station has obtained position information respectively corresponding to the beam position 1, the beam position 2, and the beam position 3.

After each time interval in the RRC configuration period 1, the satellite station recalculates, based on the position information of the satellite station and the position information corresponding to the plurality of beam positions, a beam direction corresponding to each time interval in the RRC configuration period 2, and transmits, in each time interval, data in the beam direction corresponding to each time interval, to implement a staring function for the beam position 1, the beam position 2, and the beam position 3. After each time interval in the RRC configuration period 2, corresponding actions in the RRC configuration period 2 are repeatedly performed until N RRC configuration periods elapse, to implement a staring function of the satellite station for a plurality of beam positions in the N RRC configuration periods.

It can be learned from comparison between Table 3 and Table 4 that, for control information corresponding to Table 3, a beam direction corresponding to each time interval in each RRC configuration period needs to be separately configured; and for control information in the method 500 that corresponds to Table 4, only one group of beam direction information needs to be configured, and one group of beam direction information does not need to be correspondingly configured for each RRC configuration period, to indicate a beam direction corresponding to each time interval in each RRC configuration period.

It can be learned from the control information shown in Table 4 that, a set of position information corresponding to all time intervals can be used to configure position information corresponding to each time interval in a plurality of RRC configuration periods. The control information shown in Table 4 is reconfigured only when the first network device cannot cover an area indicated by the first position information, reconfigures a forwarding resource by using RRC signaling, or activates, by using MAC CE signaling, another forwarding resource configured by using RRC.

According to the foregoing technical solution, the information carried in the control signaling can be simplified. For the dynamic configuration, the DCI needs to carry only one piece of position information indicating a beam position, to control the satellite station to implement a beam staring function for the beam position in a plurality of time intervals. For the static configuration and semi-static configuration, the RRC signaling needs to configure only one group of position information for a plurality of beam positions and a plurality of pieces of corresponding time information in one RRC configuration period, to control the satellite station to continuously perform SSB sweeping on the plurality of beam positions, that is, a staring function for the plurality of beam positions, in a plurality of RRC configuration periods. This reduces signaling overheads caused by sending the control signaling by a network side, and helps alleviates transmission pressure of signaling interaction in a communication system.

In some possible embodiments, the first position information in S510 is a first coordinate point, and the first coordinate point belongs to the first area; and the second position information in S520 includes a second coordinate point, and the second coordinate point is spatial coordinates of the first network device.

In this case, in a dynamic configuration scenario, S530 may be performed in the following manner:

The first beam direction is determined based on the first coordinate point and the second coordinate point.

In a static configuration or semi-static configuration scenario, the first control information further includes first period information, the first period information indicates a plurality of first periods, and the first period may be the RRC configuration period in the foregoing embodiment. For example, the first period includes a first time interval and a second time interval. The first position information includes a first coordinate point 1 and a first coordinate point 2, where the first coordinate point 1 corresponds to the first time interval in the first period, and the first coordinate point 2 corresponds to the second time interval in the first period. S530 may be performed in the following manner:

After a forwarding resource indicated by RRC signaling or MAC CE signaling takes effect, before a first time interval in a 1^{st} first period, a first beam direction 1 is determined based on the first coordinate point 1 and a second coordinate point 1 corresponding to a current position of the first network device.

Based on this, in the first time interval in the 1^{st} first period, the first network device transmits data in the first beam direction 1.

Before a second time interval in the 1^{st} first period, a second beam direction 1 is determined based on the first coordinate point 2 and a second coordinate point 2 corresponding to a current position of the first network device.

Based on this, in the second time interval in the 1^{st} first period, the first network device transmits data in the first beam direction 2.

Before a first time interval in a 2^{nd} first period, a first beam direction 2 is determined based on the first coordinate point 1 and a second coordinate point 3 corresponding to a current position of the first network device.

It should be understood that, assuming that duration of the first period is 20 ms, in a time sequence, if a start moment of the first time interval in the 1^{st} first period is 5 ms, a start moment of the first time interval in the 2^{nd} first period is 25 ms. The same is true to a method for calculating start moments of another time interval in the 2^{nd} first period and each time interval in another first period.

Based on this, in the first time interval in the 2^{nd} first period, the first network device transmits data in a first beam direction 3.

Before a second time interval in the 2^{nd} first period, a second beam direction 2 is determined based on the first coordinate point 2 and a second coordinate point 4 corresponding to a current position of the first network device.

Based on this, in the second time interval in the 1^{st} first period, the first network device transmits data in the first beam direction 2.

For a subsequent first period, operations corresponding to the 2^{nd} first period are repeatedly performed until the first network device cannot cover any one of the first coordinate point 1, the first coordinate point 2, and the first coordinate point 3, the second network device reconfigures a forwarding resource by using RRC signaling, or the second network device activates, by using MAC CE signaling, another forwarding resource configured by using RRC.

It should be understood that the first coordinate point and the second coordinate point are in a same coordinate system. The coordinate system may be a geodetic coordinate system, a satellite coordinate system, or a world coordinate system. This is not limited in this embodiment of this application. Alternatively, the first coordinate point and the second coordinate point may be in different coordinate systems. However, in S530, the first coordinate point and the second coordinate point need to be converted into a same coordinate system through a coordinate conversion operation.

In some possible embodiments, the first coordinate point may be any point sampled in the first area, and the point may be essentially understood as a reference point representing a beam position. For example, the first network device is a satellite station. After the satellite station determines a reference point corresponding to the beam position, even if the satellite station is moving, the satellite station can deduce a direction from the satellite station to the reference point at a current moment provided that the satellite station obtains position information of the satellite station, to implement a beam staring function of the satellite station for the reference point position.

In some possible embodiments, considering that performance of the satellite station is limited, a beam of the satellite station may not necessarily cover any direction. When the satellite station determines a beam direction pointing to a reference point position, and determines that no antenna in an antenna array of the satellite station can point to the beam direction, the satellite station may select an antenna whose beam transmission direction is closest to the beam direction, and transmit data in a beam direction corresponding to the antenna in a corresponding time interval.

For example, it is assumed that the beam direction that is of the satellite station and that points to the reference point position is denoted as a reference vector 1, and the antenna array of the satellite station includes M antennas with different beam directions, or an antenna of the satellite station may point to M directions, where M is a positive integer. In this case, a direction in which the antenna transmits a beam is denoted as a beam vector 1 to a beam vector M. Then, an operation is performed on each of the beam vector 1 to the beam vector M with a reference vector 1, to solve a spatial included angle between the reference vector 1 and each of the beam vector 1 to the beam vector M. A beam vector n that has a minimum spatial included angle with the reference vector 1 is selected as an output result, where the beam vector n may represent an antenna having a fixed direction, or may represent a beam direction, and indicates the satellite station to transmit a beam corresponding to the beam vector n.

It should be understood that the method in the foregoing embodiment is applicable to any beam configuration solution.

According to the foregoing technical solution, a coordinate point corresponding to a beam position is indicated to the satellite station, to assist the satellite station in independently determining beam directions corresponding to the satellite station in a plurality of time intervals. In addition, information carried in control signaling configured on a network side can be simplified, thereby reducing transmission pressure of signaling interaction in a communication system.

In some possible embodiments, the first position information is a reference beam direction, and the reference beam direction indicates a direction from the first network device to the first area in a reference time interval before the first time interval. The reference time interval before the first time interval may be referred to as a 0^{th} time interval.

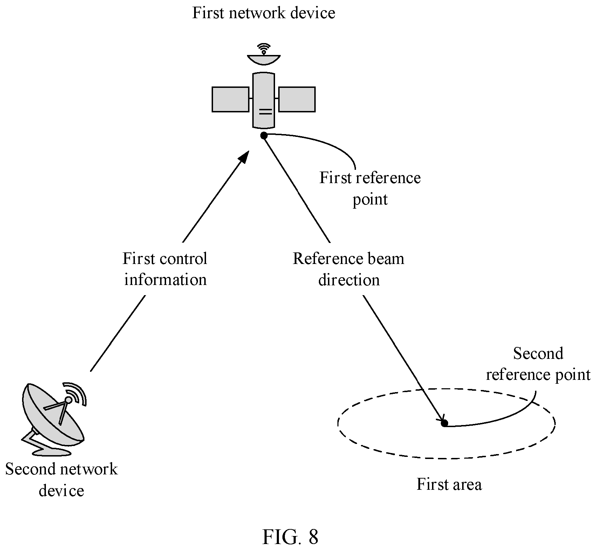

FIG. 8 is a diagram of a reference beam direction according to an embodiment of this application.

Refer to FIG. 8. The reference beam direction indicates a direction from a first network device to a first area in a reference time interval, for example, from a first reference point of the first network device to a second reference point of the first area, where the first reference point may be any point of the first network device, and typically a point on an antenna panel of the first network device may be used as a reference point; and the second reference point may be any point of the first area, and typically a central point of the first area may be used as a reference point.

In addition, the second position information in S520 includes a second coordinate point, and the second coordinate point is spatial coordinates of the first network device.

In this case, in a dynamic configuration scenario, S530 may be performed in the following manner:

A fourth coordinate point is determined based on the reference beam direction and a third coordinate point, where the third coordinate point is spatial coordinates of the first network device in the reference time interval; and the first beam direction is determined based on the second coordinate point and the fourth coordinate point.

It should be understood that the second coordinate point, the third coordinate point, and the fourth coordinate point need to be in a same coordinate system. Alternatively, the three coordinate points are converted into a same coordinate system through a coordinate conversion operation.

It can be learned from S510 to S540 that the first time interval indicated by the first time information may not be a 1^{st} time interval in which the first network device performs a beam staring function, that is, there is still a reference time interval before the first time interval. During dynamic configuration, the reference time interval, the first time information, the first position information, and the like may all be carried in DCI including content shown in Table 5.

**Table 5**

| | Time information |
|---|---|
| Reference beam direction | Reference time interval |
| | First time interval |
| | Second time interval |
| | ... |

For example, the reference time interval shown in Table 5 may be carried in reference time information, where the reference time information includes a start moment and duration of the reference time interval, includes duration and an end moment of the reference time interval, or includes a start moment and an end moment of the reference time interval.

For example, the first network device is a satellite station. After the satellite station receives the DCI, because the first position information directly indicates a beam direction, the satellite station determines, in the reference time interval, a beam 1 pointing to the reference beam direction, or adjusts a direction of a beam of an antenna, so that the beam points to the reference beam direction, and then transmits data in the reference beam direction.

However, the satellite station is moving. Therefore, after the reference time interval, it may be difficult for the previously selected beam to cover a beam position indicated by the reference beam direction in the reference time interval. Considering that the reference beam direction corresponding to the reference time interval essentially implies position information of the first area, in other words, the position information of the first area may be determined based on the reference beam direction corresponding to the reference time interval, it can be learned from the foregoing embodiment that the satellite station can obtain spatial position coordinates of the satellite station in the reference time interval, that is, the third coordinate point; and then can deduce spatial position coordinates of the first area, that is, the fourth coordinate point, based on the reference beam direction. The reference beam direction may be abstracted as a space vector in a coordinate system.

Before the first time interval, the satellite station may determine, by obtaining spatial coordinates of a current position of the satellite station and then based on the fourth coordinate point determined based on the foregoing operation, a beam direction corresponding to the satellite station in the first time interval. The same is true to operations in subsequent time intervals. Details are not described herein again. In this way, a beam staring function of the satellite station for the first area indicated by the first position information is implemented.

In some possible embodiments, the first position information may be indicated by using a beam index in current DCI.

In a static configuration or semi-static configuration scenario, the first control information further includes first period information, the first period information indicates a plurality of first periods, a 1^{st} first period includes the reference time interval, an N^{th} first period includes the first time interval, and a beam direction corresponding to the first time interval included in the N^{th} first period is determined based on the reference beam direction corresponding to the reference time interval included in the 1^{st} first period, where N is an integer greater than 1.

In some possible embodiments, a start moment of the reference time interval in the first period may be the same as or different from the start moment of the first time interval in the first period. This is not limited in this embodiment of this application. For example, the start moments of the two time intervals are the same. A length of the first period is 20 ms. In this case, in a time sequence, if a start moment of a reference time interval in a 1^{st} first period is 5 ms, a start moment of a first time interval in a 2^{nd} first period is 25 ms. In addition, duration of the reference time interval may be the same as or different from duration of the first time interval. This is not limited in this embodiment of this application.

The first position information may be indicated by using a beam index in current RRC signaling. S530 may be performed in the following manner:

After a forwarding resource indicated by RRC signaling or MAC CE signaling takes effect, the first network device transmits data in a reference beam direction 1 in a reference time interval 1 in a 1^{st} first period.

In a reference time interval 2 in the 1^{st} first period, the first network device transmits data in a reference beam direction 2.

Before a first time interval in a 2^{nd} first period, a fourth coordinate point 1 is determined based on the reference beam direction 1 and a third coordinate point 1 of the first network device in the reference time interval 1; and a first beam direction 1 is determined based on a second coordinate point 1 corresponding to a current position of the first network device and the fourth coordinate point 1.

Based on this, in the first time interval in the 2^{nd} first period, the first network device transmits data in the first beam direction 1.

It should be understood that, assuming that duration of the first period is 20 ms, in a time sequence, if a start moment of the first time interval in the 1^{st} first period is 5 ms, a start moment of the first time interval in the 2^{nd} first period is 25 ms. The same is true to a method for calculating start moments of another time interval in the 2^{nd} first period and each time interval in another first period.

Before a second time interval in the 2^{nd} first period, a fourth coordinate point 2 is determined based on the reference beam direction 2 and a third coordinate point 2 of the first network device in the reference time interval 2; and a second beam direction 1 is determined based on a second coordinate point 2 corresponding to a current position of the first network device and the fourth coordinate point 2.

Based on this, in the second time interval in the 2^{nd} first period, the first network device transmits data in the second beam direction 1.

Before a first time interval in a 3^{rd} first period, a first beam direction 2 is determined based on a second coordinate point 3 corresponding to a current position of the first network device and the fourth coordinate point 1.

Based on this, in the first time interval in the 3^{rd} first period, the first network device transmits data in the first beam direction 2.

Before a second time interval in the 3^{rd} first period, a first beam direction 2 is determined based on a second coordinate point 4 corresponding to a current position of the first network device and the fourth coordinate point 2.

Based on this, in the second time interval in the 3^{rd} first period, the first network device transmits data in the second beam direction 2.

For a subsequent first period, operations corresponding to the 2^{nd} first period are repeatedly performed until the first network device cannot point a beam to the reference beam direction 1 or the reference beam direction 2, the second network device reconfigures a forwarding resource by using RRC signaling, or the second network device activates, by using MAC CE signaling, another forwarding resource configured by using RRC.

It should be understood that the reference beam direction 1, the first beam direction 1, and the first beam direction 2 indicate a same beam position, and the reference beam direction 2, the second beam direction 1, and the second beam direction 2 indicate a same beam position, to implement a beam staring function of the satellite station for a plurality of beam positions in a plurality of RRC configuration periods.

During static configuration or semi-static configuration, the reference time interval, the first time information, the first position information, and the like may all be carried in RRC signaling including content shown in Table 6.

**Table 6**

| RRC configuration period | | Time information |
|---|---|---|
| Period 1 | Reference beam direction 1 | Reference time interval 1 |
| | Reference beam direction 2 | Reference time interval 2 |
| | Reference beam direction 3 | Reference time interval 3 |
| | ... | ... |
| Periods 2 to N | | First time interval |
| | | Second time interval |
| | | Third time interval |
| | | ... |

It should be understood that, in current DCI indicating a beam direction of the satellite station or current RRC signaling in a 1^{st} RRC configuration period that is determined by the network side, a beam index corresponding to a 1^{st} time interval in the DCI or beam indexes corresponding to a plurality of time intervals in the 1^{st} RRC configuration period in the RRC signaling indicate a beam direction in which the satellite station transmits a beam. In view of this, the reference beam direction included in the first position information in the foregoing embodiment of this application may use a beam index corresponding to the 1^{st} time interval defined currently. In the reference time interval, the satellite station may calculate, based on the beam index and current position information of the satellite station, information about a position to which the beam is to point.

According to the foregoing technical solution, for dynamic configuration, some information formats in the current DCI may be reused, and content of the current DCI is directly simplified, so that beam directions corresponding to a plurality of time intervals can be indicated. For static configuration and semi-static configuration, some information formats in the current RRC signaling may be reused, and content of the current RRC signaling is directly simplified, so that beam directions respectively corresponding to a plurality of time intervals in a plurality of RRC configuration periods can be indicated. An existing data format of control signaling can be directly reused while control signaling overheads are reduced, and the data format of the control signaling does not need to be reconstructed, thereby reducing implementation difficulty of this solution.

In some possible embodiments, the first control information mentioned in the embodiment corresponding to the method 500 may further include a first flag. The first flag may be a trigger Flag, and a value of the trigger Flag may be assigned to 1 or 0. When the value of the trigger Flag is assigned to 1, it indicates that the first network device is triggered to perform the operation in the method 500; and when the value of the trigger Flag is assigned to 0, it indicates that the first network device is not triggered to perform the operation in the method 500. Alternatively, when the value of the trigger Flag is assigned to 0, it indicates that the first network device is triggered to perform the operation in the foregoing method 500; and when the value of the trigger Flag is assigned to 1, it indicates that the first network device is not triggered to perform the operation in the foregoing method 500. The first network device may perform subsequent beam transmission actions according to the current beam configuration method. When the value of the trigger Flag is assigned to 1, it indicates that the first network device is triggered to perform the operation in the method 500, that is, the first network device is indicated to determine the first beam direction based on the first position information included in the first control information, to perform a beam staring function.

It can be learned that, when the trigger Flag is 0, the first control information may carry the configuration information shown in Table 1 or Table 3. It can be learned that, when the trigger Flag is 1, the first control information may carry the configuration information shown in Table 2, Table 4, Table 5, or Table 6.

Certainly, the first network device may alternatively be implicitly triggered to perform the operation in the method 500. For example, the first control information is DCI or RRC signaling. Because a signaling format and a signaling length of the DCI or the RRC signaling in this application are different from a signaling format and a signaling length of the current DCI or RRC signaling, whether the DCI or the RRC signaling indicates the first network device to trigger execution of the method 500 may be determined based on the signaling format and the signaling length of the DCI or the RRC signaling.

In some possible embodiments, the first network device may further determine first capability information, where the first capability information indicates whether a beam of the first network device is capable of pointing to any direction; and then send the first capability information.

It should be understood that whether the beam of the first network device is capable of pointing to any direction is essentially description of a beamforming capability of the first network device. If the beam of the first network device is capable of pointing to any direction, it indicates that the first network device has the beamforming capability. If the beam of the first network device is incapable of pointing to any direction, it indicates that the first network device does not have the beamforming capability.

Correspondingly, the second network device receives the first capability information from the first network device, and when the first capability information indicates that the beam of the first network device is capable of pointing to any direction, the second network device determines and sends the first control information mentioned in the foregoing method 500.

In some possible embodiments, the first capability information may alternatively be represented by using an enable Flag. When a value of the enable Flag is assigned to 0, it indicates that the first network device does not have a beamforming capability, and therefore does not support a beam staring function; and when a value of the enable Flag is assigned to 1, it indicates that the first network device has a beamforming capability, and therefore supports a beam staring function. Alternatively, when a value of the enable Flag is assigned to 1, it indicates that the first network device does not have a beamforming capability, and therefore does not support a beam staring function; and when a value of the enable Flag is assigned to 0, it indicates that the first network device has a beamforming capability, and therefore supports a beam staring function.

According to the foregoing technical solution, the first network device reports information about whether the first network device has a staring function, so that a network side can accurately learn of a beamforming capability of the first network device, to enable the network side to effectively control the first network device.

It should be understood that, although there are only three beam configuration solutions proposed currently: dynamic configuration, static configuration, and semi-static configuration, another possible configuration solution in the future may also be applied to the satellite communication method provided in embodiments of this application.

In addition, an embodiment of this application further provides an apparatus configured to implement any one of the foregoing methods. For example, a satellite communication apparatus is provided. The apparatus includes a unit (or a means) for implementing any one of the foregoing satellite communication methods.

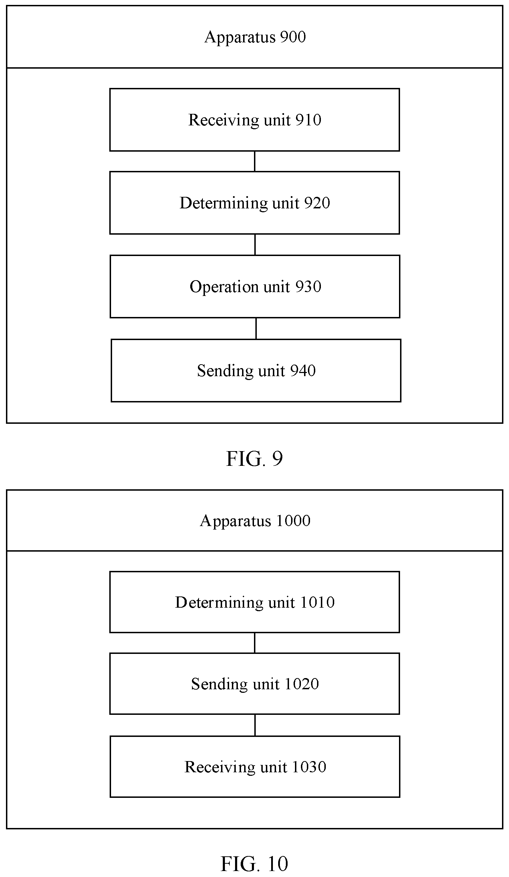

FIG. 9 is a schematic block diagram of a satellite communication apparatus 900 according to an embodiment of this application. As shown in FIG. 9, the apparatus 900 is applied to the foregoing first network device, and the apparatus 900 includes:
a receiving unit 910, configured to receive first control information, where the first control information includes first position information and first time information, the first position information indicates a position of a first area to be covered by a beam of the first network device, and the first time information indicates a first time interval;
a determining unit 920, configured to determine a first beam direction based on the first position information and second position information, where the second position information indicates a position of the first network device; and
an operation unit 930, configured to transmit data in the first beam direction in the first time interval.

In some possible embodiments, the first position information is a first coordinate point, and the first coordinate point belongs to the first area; or the first position information is a reference beam direction, and the reference beam direction indicates a direction from the first network device to the first area in a reference time interval before the first time interval; and the second position information is a second coordinate point, and the second coordinate point is spatial coordinates of the position of the first network device.

In some possible embodiments, when the first position information is the reference beam direction, the determining unit 920 is specifically configured to: determine a fourth coordinate point based on the reference beam direction and a third coordinate point, where the third coordinate point is spatial coordinates of the first network device in the reference time interval; and determine the first beam direction based on the second coordinate point and the fourth coordinate point.

In some possible embodiments, the first control information further includes first period information, the first period information indicates a plurality of first periods, and when the first position information is the reference beam direction, a 1^{st} first period includes the reference time period, an N^{th} first period includes the first time period, and a beam direction corresponding to the first time interval included in the N^{th} first period is determined based on the reference beam direction corresponding to the reference time interval included in the 1^{st} first period, where N is an integer greater than 1.

In some possible embodiments, the first control information further includes a first flag, and the first flag is used to trigger the determining unit 920 to determine the first beam direction based on the first position information and the second position information.

In some possible embodiments, the first control information is DCI or RRC signaling.

In some possible embodiments, the apparatus 900 further includes a sending unit 940, configured to send first capability information, where the first capability information indicates whether the beam of the first network device is capable of pointing to any direction.

FIG. 10 is a schematic block diagram of a satellite communication apparatus 1000 according to an embodiment of this application. As shown in FIG. 10, the apparatus 1000 is applied to the foregoing second network device, and the apparatus 1000 includes:
a determining unit 1010, configured to: determine first control information, where the first control information includes first position information and first time information, the first position information indicates a position of a first area to be covered by a beam of a first network device, the first time information indicates a first time interval, and the first control information indicates the first network device to determine a first beam direction based on the first position information, and transmit data in the first beam direction in the first time interval; and
a sending unit 1020, configured to send the first control information.

In some possible embodiments, the first position information is a first coordinate point, and the first coordinate point belongs to the first area; or the first position information is a reference beam direction, and the reference beam direction indicates a direction from the first network device to the first area in a reference time interval before the first time interval.

In some possible embodiments, the first control information further includes first period information, the first period information indicates a plurality of first periods, and when the first position information is the reference beam direction, a 1^{st} first period includes the reference time interval, an N^{th} first period includes the first time interval, and a beam direction corresponding to the first time interval included in the N^{th} first period is determined based on the reference beam direction corresponding to the reference time interval included in the 1^{st} first period, where N is an integer greater than 1.

In some possible embodiments, the first control information further includes a first flag, the first flag is used to trigger the first network device to determine the first beam direction based on the first position information and second position information, and the second position information indicates a position of the first network device.

In some possible embodiments, the first control information is DCI or RRC signaling.

In some possible embodiments, the apparatus 1000 further includes a receiving apparatus 1030, configured to receive first capability information, where the first capability information indicates whether the beam of the first network device is capable of pointing to any direction; and the determining unit 1010 is specifically configured to determine the first control information when the first capability information indicates that the beam of the first network device is capable of pointing to any direction.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A satellite communication method, applied to a first network device, wherein the method comprises:
receiving first control information, wherein the first control information comprises first position information and first time information, the first position information indicates a position of a first area to be covered by a beam of the first network device, and the first time information indicates a first time interval;
determining a first beam direction based on the first position information and second position information, wherein the second position information indicates a position of the first network device; and
transmitting data in the first beam direction in the first time interval.

2. The method according to claim 1, wherein the first position information is a first coordinate point, and the first coordinate point belongs to the first area; or the first position information is a reference beam direction, and the reference beam direction indicates a direction from the first network device to the first area in a reference time interval before the first time interval; and the second position information is a second coordinate point, and the second coordinate point is spatial coordinates of the position of the first network device.

3. The method according to claim 2, wherein when the first position information is the reference beam direction, the determining the first beam direction based on the first position information and the second position information comprises:
determining a fourth coordinate point based on the reference beam direction and a third coordinate point, wherein the third coordinate point is spatial coordinates of the first network device in the reference time interval; and
determining the first beam direction based on the second coordinate point and the fourth coordinate point.

4. The method according to claim 2 or 3, wherein the first control information further comprises first period information, the first period information indicates a plurality of first periods, and when the first position information is the reference beam direction, a 1^{st} first period comprises the reference time interval, an N^{th} first period comprises the first time interval, and a beam direction corresponding to the first time interval comprised in the N^{th} first period is determined based on the reference beam direction corresponding to the reference time interval comprised in the 1^{st} first period, wherein N is an integer greater than 1.

5. The method according to any one of claims 1 to 4, wherein the first control information further comprises a first flag, and the first flag is used to trigger the first network device to determine the first beam direction based on the first position information and the second position information.

6. The method according to any one of claims 1 to 5, wherein the first control information is downlink control information DCI or radio resource control RRC signaling.

7. The method according to any one of claims 1 to 6, wherein the method further comprises:
sending first capability information, wherein the first capability information indicates whether the beam of the first network device is capable of pointing to any direction.

8. A satellite communication method, applied to a second network device, wherein the method comprises:
determining first control information, wherein the first control information comprises first position information and first time information, the first position information indicates a position of a first area to be covered by a beam of a first network device, the first time information indicates a first time interval, and the first control information indicates the first network device to determine a first beam direction based on the first position information, and transmitting data in the first beam direction in the first time interval; and
sending the first control information.

9. The method according to claim 8, wherein the first position information is a first coordinate point, and the first coordinate point belongs to the first area; or the first position information is a reference beam direction, and the reference beam direction indicates a direction from the first network device to the first area in a reference time interval before the first time interval.

10. The method according to claim 9, wherein the first control information further comprises first period information, the first period information indicates a plurality of first periods, and when the first position information is the reference beam direction, a 1^{st} first period comprises the reference time interval, an N^{th} first period comprises the first time interval, and a beam direction corresponding to the first time interval comprised in the N^{th} first period is determined based on the reference beam direction corresponding to the reference time interval comprised in the 1^{st} first period, wherein N is an integer greater than 1.

11. The method according to any one of claims 8 to 10, wherein the first control information further comprises a first flag, the first flag is used to trigger the first network device to determine the first beam direction based on the first position information and second position information, and the second position information indicates a position of the first network device.

12. The method according to any one of claims 8 to 11, wherein the first control information is downlink control information DCI or radio resource control RRC signaling.

13. The method according to any one of claims 8 to 12, wherein the method further comprises:
receiving first capability information, wherein the first capability information indicates whether the beam of the first network device is capable of pointing to any direction; and
the determining the first control information comprises:
determining the first control information when the first capability information indicates that the beam of the first network device is capable of pointing to any direction.

14. A satellite communication apparatus, applied to a first network device, wherein the apparatus comprises:
a receiving unit, configured to receive first control information, wherein the first control information comprises first position information and first time information, the first position information indicates a position of a first area to be covered by a beam of the first network device, and the first time information indicates a first time interval;
a determining unit, configured to determine a first beam direction based on the first position information and second position information, wherein the second position information indicates a position of the first network device; and
an operation unit, configured to transmit data in the first beam direction in the first time interval.

15. The apparatus according to claim 14, wherein the first position information is a first coordinate point, and the first coordinate point belongs to the first area; or the first position information is a reference beam direction, and the reference beam direction indicates a direction from the first network device to the first area in a reference time interval before the first time interval; and the second position information is a second coordinate point, and the second coordinate point is spatial coordinates of the position of the first network device.

16. The apparatus according to claim 15, wherein when the first position information is the reference beam direction, the determining unit is specifically configured to:
determine a fourth coordinate point based on the reference beam direction and a third coordinate point, wherein the third coordinate point is spatial coordinates of the first network device in the reference time interval; and
determine the first beam direction based on the second coordinate point and the fourth coordinate point.

17. The apparatus according to claim 15 or 16, wherein the first control information further comprises first period information, the first period information indicates a plurality of first periods, and when the first position information is the reference beam direction, a 1^{st} first period comprises the reference time interval, an N^{th} first period comprises the first time interval, and a beam direction corresponding to the first time interval comprised in the N^{th} first period is determined based on the reference beam direction corresponding to the reference time interval comprised in the 1^{st} first period, wherein N is an integer greater than 1.

18. The apparatus according to any one of claims 14 to 17, wherein the first control information further comprises a first flag, and the first flag is used to trigger the determining unit to determine the first beam direction based on the first position information and the second position information.

19. The apparatus according to any one of claims 14 to 18, wherein the first control information is downlink control information DCI or radio resource control RRC signaling.

20. The apparatus according to any one of claims 14 to 19, wherein the apparatus further comprises:
a sending unit, configured to send first capability information, wherein the first capability information indicates whether the beam of the first network device is capable of pointing to any direction.

21. A satellite communication apparatus, applied to a second network device, wherein the apparatus comprises:
a determining unit, configured to: determine first control information, wherein the first control information comprises first position information and first time information, the first position information indicates a position of a first area to be covered by a beam of a first network device, the first time information indicates a first time interval, and the first control information indicates the first network device to determine a first beam direction based on the first position information, and transmit data in the first beam direction in the first time interval; and
a sending unit, configured to send the first control information.

22. The apparatus according to claim 21, wherein the first position information is a first coordinate point, and the first coordinate point belongs to the first area; or the first position information is a reference beam direction, and the reference beam direction indicates a direction from the first network device to the first area in a reference time interval before the first time interval.

23. The apparatus according to claim 22, wherein the first control information further comprises first period information, the first period information indicates a plurality of first periods, and when the first position information is the reference beam direction, a 1^{st} first period comprises the reference time interval, an N^{th} first period comprises the first time interval, and a beam direction corresponding to the first time interval comprised in the N^{th} first period is determined based on the reference beam direction corresponding to the reference time interval comprised in the 1^{st} first period, wherein N is an integer greater than 1.

24. The apparatus according to any one of claims 21 to 23, wherein the first control information further comprises a first flag, the first flag is used to trigger the first network device to determine the first beam direction based on the first position information and second position information, and the second position information indicates a position of the first network device.

25. The apparatus according to any one of claims 21 to 24, wherein the first control information is downlink control information DCI or radio resource control RRC signaling.

26. The apparatus according to any one of claims 21 to 25, wherein the apparatus further comprises:
a receiving apparatus, configured to receive first capability information, wherein the first capability information indicates whether the beam of the first network device is capable of pointing to any direction; and
the determining unit is specifically configured to determine the first control information when the first capability information indicates that the beam of the first network device is capable of pointing to any direction.

27. A satellite communication apparatus, comprising a processor and a memory, wherein the processor is connected to the memory, the memory is configured to store program code, and the processor is configured to invoke the program code, to perform the method according to any one of claims 1 to 13.

28. A chip system, wherein the chip system is used in an electronic device; the chip system comprises one or more interface circuits and one or more processors; the interface circuit and the processor are interconnected through a line; the interface circuit is configured to: receive a signal from a memory of the electronic device, and send the signal to the processor, wherein the signal comprises computer instructions stored in the memory; and when the processor executes the computer instructions, the electronic device performs the method according to any one of claims 1 to 13.

29. A computer-readable storage medium, wherein the computer-readable storage medium stores a computer program, and the computer program is executed by a processor to implement the method according to any one of claims 1 to 13.

30. A computer program product, wherein when the computer program code or instructions are executed on a computer, the computer is enabled to perform the method according to any one of claims 1 to 13.
